# EUROPEAN PATENT APPLICATION

(11) **EP 2 169 528 A2**
(43) Date of publication of application: **31.03.2010**
(21) Application number: 09250031.3
(22) Date of filing: 07.01.2009
(51) Int. Cl.: G06F 3/048

(54) **Method of operating a user interface**

(30) Priority: 24.09.2008 US 236510
(71) Applicant: Compal Electronics, Inc., Taipei City 11492 (TW)
(72) Inventor: Hsu, Yu-Ting, Taipei City 11492 (TW); Wu, Yi-His, Taipei City 11492 (TW)
(74) Representative: Johnson, Terence Leslie

(57) **Abstract**

A user interface operating method is provided. The method is suitable for an electronic device (200) having a touch screen (210). First, a touch sensitive area (220) or (211) is activated to detect a first touch. Then, a second touch on the touch screen (210) is detected when the first touch is detected to be laid on the touch sensitive area. Finally, a function of the user interface is enabled according to the second touch. Accordingly, overall operations supported by the touch screen (210) can be increased and the convenience for operating the user interface can be improved.

## Description

### BACKGROUND OF THE INVENTION

### 1. Field of the Invention

The present invention generally relates to an operating method, and more particularly, to a user interface operating method incorporating the gestures of two touch.

### 2. Description of Related Art

In order to keep up with the quick pace of modem life, various electronic devices that can be conveniently carried without occupying a large space have been increasingly developed. For example, a personal digital assistant (PDA) phone not only provides various functions of a conventional communication device, but also enables a user to write a document, send/receive E-mails, browse networks, or use instant messaging software through operating a user interface of an operating system.

That is to say, the electronic device may not only be used to make a call, but further provide various diversified functions like a small personal computer. With the rapid progress of wireless network technique, the applications of such functions are no longer limited by time and space. As for modem people who emphasize efficiency, such an electronic device has become indispensable.

However, considering the requirements for the portable electronic device such as being light, thin, short, and small, the volume of the device is quite limited. If it intended to have both a screen and a keyboard on the device, the size of the screen has to be reduced. In order to configure a larger screen within a limited space, recently, a touch screen has been developed. The touch screen integrates a keyboard therein and serves as an input interface for the portable electronic device, so as to save the cost for configuring the conventional keyboard and reduce the occupied area.

Compared with the conventional input mode through a keyboard, the touch screen operating manner has advantages of being more simple and intuitive. When a user operates an electronic device through a conventional keyboard, he/she must view the graphics on the screen while typing on the keyboard, so as to successively finish the operations such as text input or menu switch. However, if a touch screen is applied to the electronic device, the user merely needs to click with a stylus or to touch with a finger, so as to easily execute various operations on the screen. Therefore, the touch screen is practically a more convenient input means.

As the touch screen is widely applied to the electronic device, various operations for user interface has been developed. However, since the touch is a single input manner, the current user interface operating method usually defines the operations of the user interface with gestures such as single press, double presses, press and drag, or long press, which is not sufficient to support all the functions provided by the operating system. Therefore, a user can only operate the user interface by clicking different tiers of menu, which is very inconvenient.

### SUMMARY OF THE INVENTION

In light of the above, the present invention seeks to provide a user interface operating method, in which a function is enabled by a touch when another touch is detected to be laid on a touch sensitive area.

According to the invention there is provided a user interface operating method, suitable for an electronic device having a touch screen, the method comprising: detecting a first touch on a touch sensitive area; detecting a second touch on the touch screen when the first touch is detected to be laid on the touch sensitive area; and enabling an operation element of the user interface according to the second touch.
In order to achieve the above-mentioned or other objects, the present invention provides a user interface operating method, which is suitable for an electronic device having a touch screen. First, the electronic device is powered on and a touch sensitive area is activated to detect a first touch. A second touch on the touch screen is detected when the first touch is detected to be laid on the touch sensitive area. An operation element of the user interface is then enabled according to the second touch.

According to an embodiment of the present invention, when the first touch is detected to be laid on the touch sensitive area, a GUI (Graphic User Interface) element may be displayed on the touch screen, the second touch over the GUI element is detected, and the function of the GUI element is enabled according to the second touch.

According to an embodiment of the present invention, before displaying the GUI element on the touch screen, it is determined whether the first touch lays on the touch sensitive area for more than a preset amount of time and the GUI element may be displayed on the touch screen when the first touch lays for more than the preset amount of time.

According to an embodiment of the present invention, the GUI element may be deactivated when the first touch is no longer detected.

According to an embodiment of the present invention, the GUI element may comprise a virtual control button or a virtual scroll wheel.

According to an embodiment of the present invention, the step of enabling the function of the GUI element according to the second touch preferably comprises executing a control operation on the touch screen according to the second touch operated over the virtual control button, in which the control operation comprises zooming, shifting, or rotating a frame displayed on the touch screen.

According to an embodiment of the present invention, the step of enabling the function of the GUI element according to the second touch suitably comprises scrolling a frame displayed on the touch screen according to the second touch operated over the virtual scroll wheel.

According to an embodiment of the present invention, when the first touch is detected to be laid on the touch sensitive area, an item menu comprising a plurality of items may be displayed on the touch screen, a second touch over one of the items in item menu is detected, and an operation corresponding to the item selected by the second touch is performed, in which the operation comprises displaying a sub item menu of the item.

According to an embodiment of the present invention, before displaying the item menu on the touch screen, it is determined whether the first touch lays on the touch sensitive area for more than a preset amount of time, and the item menu is displayed on the touch screen when the first touch lays for more than the preset amount of time.

According to an embodiment of the present invention, the item menu may be closed, hidden, or deactivated when the first touch is no longer detected.

According to an embodiment of the present invention, the step of enabling the operation element of the user interface according to the second touch may comprise scrolling a frame displayed on the touch screen according to a displacement of the second touch.

According to an embodiment of the present invention, a size of a frame displayed on the touch screen may be adjusted according to a displacement of the second touch.

According to an embodiment of the present invention, the touch sensitive area may be on a touch sensitive element disposed on the electronic device and the touch sensitive element may comprise a touch button or a touchpad.

According to an embodiment of the present invention, the touch sensitive area may be a specific area on the touch screen of the electronic device.

According to an embodiment of the present invention, the electronic device may comprise a mobile phone, a personal digital assistant (PDA), a global positioning system (GPS) device, or a laptop.

In the present invention, a specific touch sensitive area may be used as a trigger to change the operations corresponding to the gestures of a user. With a long press on a touch button, a touchpad or a specific area on the touch screen, a GUI element or an item menu is activated and displayed on the touch screen for the user to operate, such that overall operations supported by the touch screen can be increased and the convenience for operating the user interface can be improved.

In order to make the aforementioned and other objects, features, and advantages of the present invention comprehensible, preferred embodiments accompanied with figures are described in detail below.

### BRIEF DESCRIPTION OF THE DRAWINGS

The accompanying schematic drawings are included to provide a further understanding of the invention, and are incorporated in and constitute a part of this specification. The drawings illustrate embodiments of the invention and, together with the description, serve to explain the principles of the invention.

FIG. 1 is a flowchart illustrating a user interface operating method according to an embodiment of the present invention;

FIG. 2 is a schematic diagram illustrating an electronic device having a touch screen according to an embodiment of the present invention;

FIG. 3 is a schematic diagram illustrating an example of operating a user interface according to an embodiment of the present invention;

FIG. 4(a)~4(b) are schematic diagrams illustrating an example of operating a user interface according to an embodiment of the present invention;

FIG. 5 is a flowchart illustrating a user interface oeprating method according to an embodiment of the present invention;

FIG. 6 is a schematic diagram illustrating an example of operating a user interface according to an embodiment of the present invention;

FIG. 7 is a schematic diagram illustrating an example of operating a user interface according to an embodiment of the present invention;

FIG. 8 is a flowchart illustrating a user interface oeprating method according to an embodiment of the present invention; and

FIG. 9(a)∼9(b) are schematic diagrams illustrating an example of operating a user interface according to an embodiment of the present invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

When users operate an electronic device with a touch screen, especially for handheld electronic devices such as personal digital assistants, they are used to holding the device with one hand and operating the device with the other hand. At this time, the hand holding the device is usually irrelevant to the operation of the device, but one of the fingers thereof (like a thumb) may be avaliable for use in operating the device. Accordingly, with a long press on a specific touch sensitive area of the dvice by the available finger, the present invention provides more combinations of gestures for operating the device. To make the content of the present invention more comprehensive, some embodiments are provided in the following as examples for the implementation of the present invention.

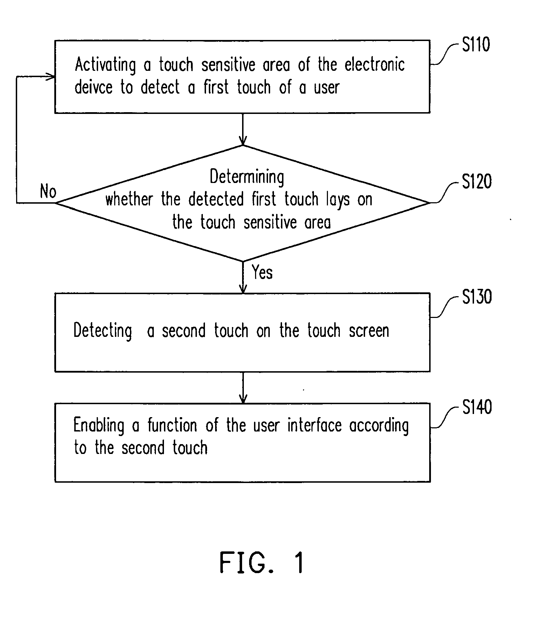

FIG. 1 is a flowchart illustrating a user interface operating method according to an embodiment of the present invention. Referring to FIG. 1, the method of the present embodiment is applied to an electronic device having a touch screen, for example, the electronic device may be a mobile phone, a personal digital assistant (PDA), a global positioning system (GPS) device, or a laptop, but the scope of the present invention is not limited thereto. The method includes the following steps.

First, the electronic device is powered on and a touch sensitive area of the electronic device is activated to detect a first touch of a user (S110). In one embodiment, the touch sensitive area may be a touch sensitive element such as a touch button or a touchpad disposed on the electronic device, and in another embodiment, the touch sensitive area may be a specific area on the touch screen of the electronic device.

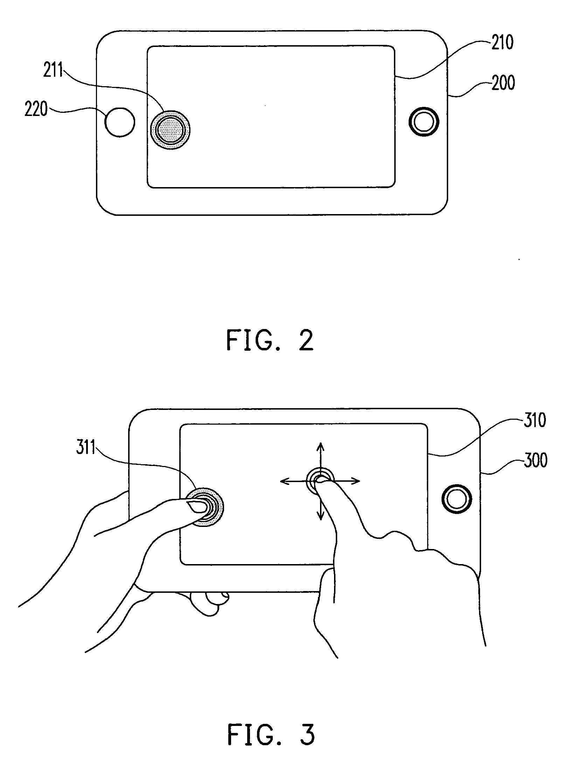

For example, FIG. 2 is a schematic diagram illustrating an electronic device having a touch screen according to an embodiment of the present invention. Referring to FIG. 2, the electronic device 200 is disposed with a touch screen 210 and a touch button 220, which are all sensitive to the touch of a user. The user may touch the touch button 220 or a specific area 211 of the touch screen 210 so as to trigger the user interface operating method of the present invention.

Then, the electronic device determines whether the detected first touch lays on the touch sensitive area (S120). When the first touch is detected to be laid on the touch sensitive area, that is, the touch sensitive area is long pressed by a toucher object such as a finger or a stylus, the electronic device further detects a second touch on the touch screen (S 130). The second touch may be detected within the display area of the touch screen or within a specific area of the touch screen, and the scope of the present invention is not limited thereto.

It should be noted herein that, in another embodiment, the time period that the first touch laid on the touch sensitive area is accumulated and compared with a preset amount of time, so as to determine whether the user intends to triger the user interface operating method of present invention. Whenever the laid time of the first touch exceeds the preset amount of time, the electronic device proceeds to detect the second touch on the touch screen, so as to operate the user interface displayed on the electronic device.

When the first touch is detected to be laid on the touch sensitive area and a second touch is detected on the touch screen, the electronic device then enables a function of the user interface according to the second touch (S 140). The function includes control operations such as zooming, shifting, scrolling, or rotating a frame displayed on the touch screen, and selecting operations such as selecting an item in an item menu. To be specific, the function of the user interface can be enabled only when the user simultaneously long presses the touch sensitive area and operates on the touch screen. For example, a user may use his left hand to long press the touch sensitive area and use his right hand to touch and move on the touch screen, and then a frame displayed on the touch screen is scrolled, or a size of the frame is adjusted according to a displacement of the second touch.

For example, FIG. 3 is a schematic diagram illustrating an example of operating a user interface according to an embodiment of the present invention. Referring to FIG. 3, with a left thumb laid on a specific area 311 of a touch screen 310 of an electronic device 300, a user may further uses his right forefinger to press the touch screen 310 so as to scroll a frame displayed on the touch screen 310.

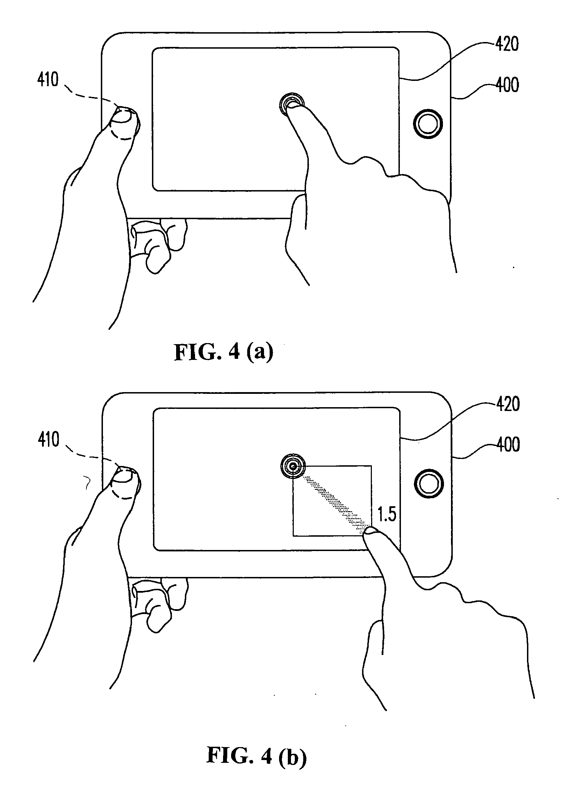

On the other hand, FIG. 4(a)-4(b) are schematic diagrams illustrating an example of operating a user interface according to an embodiment of the present invention. Referring to FIG. 4(a), with a left thumb laid on the touch button 410, a user may further uses his right forefinger to long press the touch screen 420 so as to activate a frame size adjusting function. Then, referring to FIG. 4(b), when the user moves his right forefinger toward a right bottom corner of the touch screen 420, a rectangle is drawn and a scale is displayed according to the displacement of the touch activated by the right forefinger of the user. To be specific, the scale of the frame to be enlarged is directly proportional to the displacement of the touch, and is calculated and displayed on the touch screen 420. When the user releases his right forefinger from the touch screen 420, the frame displayed on the touch screen 420 is enlarged according to the scale last displayed. In this embodiment, the last displayed scale is 1.5, such that the frame is also enlarged by 1.5 times.

It should be noted herein that, in other embodiments, the electronic device may further display a GUI element or an item menu on the touch screen for the user to operate when a long press of the first touch is detected. Moreover, various functions are enabled according to the gestures performed on the GUI element and the item menu. Embodiments are given below for the detailed illustration.

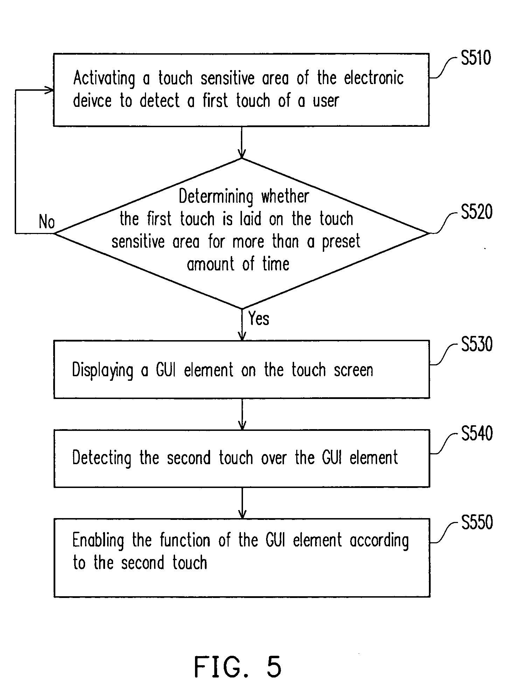

FIG. 5 is a flowchart illustrating a user interface operating method according to an embodiment of the present invention. Referring to FIG. 5, the method of the present embodiment is applied to an electronic device having a touch screen, in which a GUI element is displayed on the touch screen when a first touch is detected to be laid on a touch sensitive area of the electronic device. The method includes the following steps.

First, a touch sensitive area of the electronic device is activated to detect a first touch of a user (S510), in which the touch sensitive area is a touch sensitive element such as a touch button or a touchpad disposed on the electronic device.

Then, the electronic device determines whether the first touch is laid on the touch sensitive area for more than a preset amount of time (S520). When the laid time of the first touch exceeds the preset amount of time, a GUI element is then displayed on the touch screen (S530). Then, a second touch over the GUI element is detected by the touch screen (S540) and used as a reference to enable the function of the GUI element (S550).

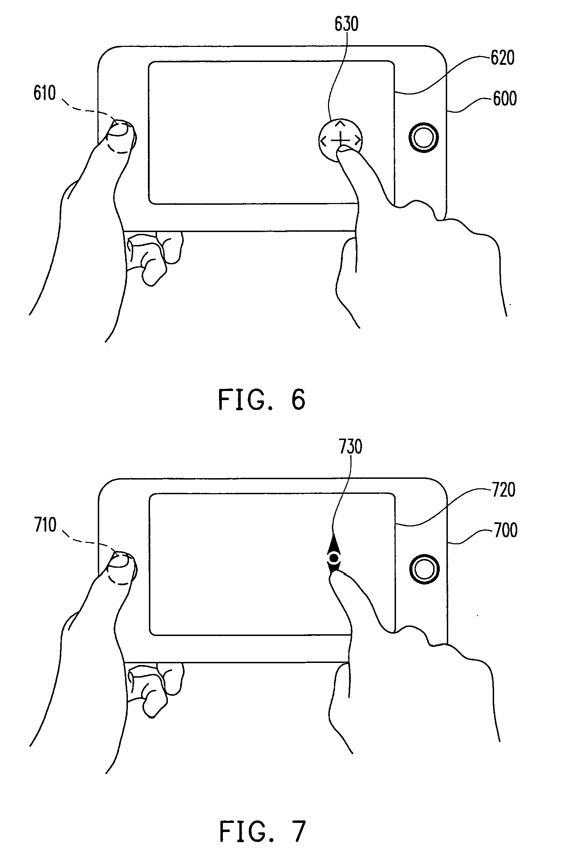

To be specific, the GUI element may be a virtual control button and the electronic device may execute a control operation on the touch screen according to the second touch operated over the virtual control button. The control operation includes zooming, shifting, or rotating a frame displayed on the touch screen. For example, FIG. 6 is a schematic diagram illustrating an example of operating a user interface according to an embodiment of the present invention. Referring to FIG. 6, when a user uses his left thumb to long press a touch button 610 of the electronic device 600, a virtual control button 630 is displayed on the right side of the touch screen 620. With the left thumb laid on the touch button 610, the user may further uses his right forefinger to press the virtual control button 630 so as to shift a frame displayed on the touch screen.

Furthermore, in another embodiment, the GUI element may be a virtual scroll wheel and the electronic device may scroll a frame displayed on the touch screen according to the second touch operated over the virtual scroll wheel. For example, FIG. 7 is a schematic diagram illustrating an example of operating a user interface according to an embodiment of the present invention. Referring to FIG. 7, when a user uses his left thumb to long press a touch button 710 of the electronic device 700, a virtual scroll wheel 730 is displayed on the right side of the touch screen 720. With the left thumb laid on the touch button 710, the user may further uses his right forefinger to press the virtual scroll wheel 730 so as to scroll a frame displayed on the touch screen 720.

Based on the above, it should be noted herein that if the first touch is no longer detected during the operation of the user interface, the GUI element will be deactivated and the operation of the user interface is also terminated. At this time, the user may use original means to operate the user interface. Accordingly, the variety of gestures or functions that can be performed on the user interface is increased.

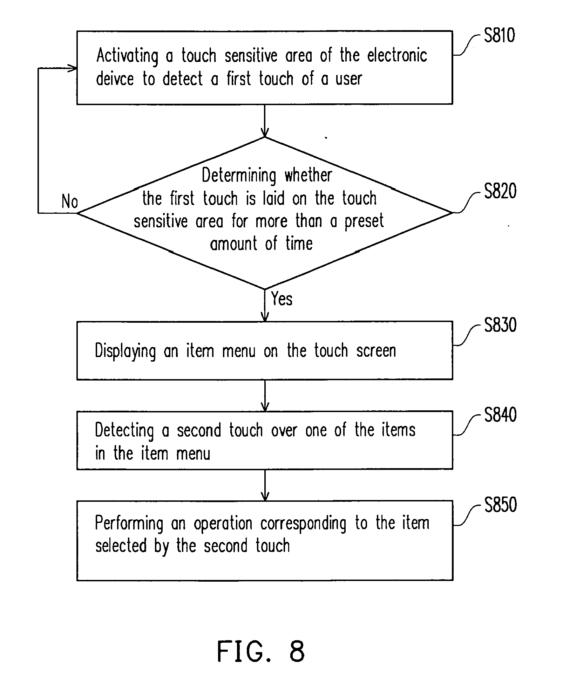

In yet another embodiment, an item menu including a plurality of items is displayed on the touch screen for a user to select. FIG. 8 is a flowchart illustrating a user interface oeprating method according to an embodiment of the present invention. Referring to FIG. 8, the method of the present embodiment is applied to an electronic device having a touch screen, in which an item menu is displayed on the touch screen when a first touch is detected to be laid on a touch sensitive area of the electronic device. The method includes the following steps.

First, the electronic device is powered on and a touch sensitive area of the electronic device is activated to detect a first touch of a user (S810), in which the touch sensitive area is a specific area of the touch screen.

Then, the electronic device determines whether the first touch is laid on the touch sensitive area for more than a preset amount of time (S820). When the laid time of the first touch exceeds the preset amount of time, an item menu is then displayed on the touch screen (S830) and a second touch over one of the items in the item menu is detected by the touch screen (S840) and used for performing an operation corresponding to the item selected by the second touch (S850). The operation includes executing an item function of the selected item or displaying a sub item menu of the selected item, but the scope of the present invention is not limited thereto. It should be noted herein that the item menu may be closed or hidden when the first touch is no longer detected.

To be specific, the item menu described above is like the operation element menu displayed at the position of a cursor on the user interface of a windows operating system when a right key of a mouse is pressed. Since the operation of the touch screen is a single input manner (touch) and the touch is usually translated into operations such as moving a cursor on the screen, or selecting an item on the screen, other functions existing in the windows operating system such as displaying the item menu with a press of a right key of a mouse may not be corresponded to. Accordingly, with the assistance of the long press of the touch sensitive area, the present invention may provides the same amount of functions as the windows operating system does.

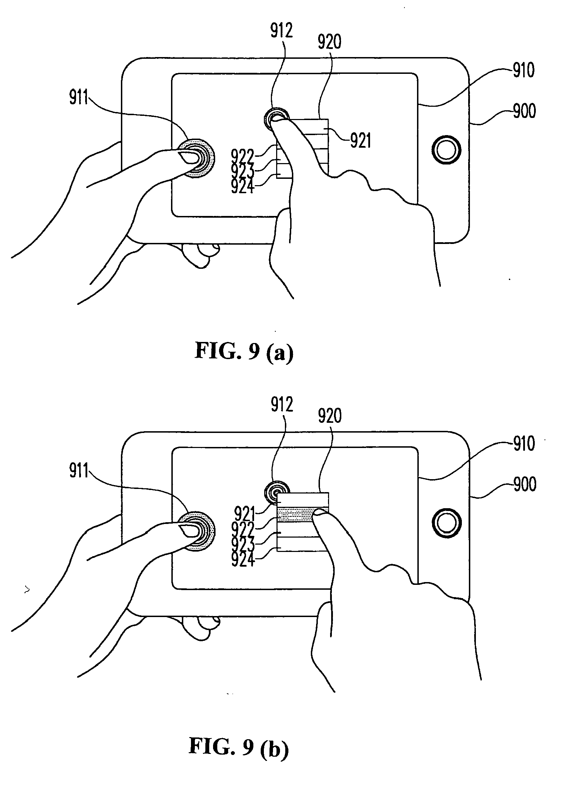

For example, FIG. 9(a)∼9(b) are schematic diagrams illustrating an example of operating a user interface according to an embodiment of the present invention. Referring to FIG. 9(a), when a user uses his left thumb to long press a specific area 911 of a touch screen 910 of the electronic device 900 and uses his right forefinger to press a certain area 912 of the touch screen 910, an item menu 920 including items 921, 922, 923, 924 is displayed at the position of the area 912. Then, referring to FIG. 9(b), with the long press of the specific area 911 by left thumb, the user may use his right forefinger to select one of the items 921, 922, 923, 924 in the item menu 910, such that the electronic device can execute the function corresponding to the selected item or display a sub item menu of the selected item. The user may keep selecting the items around the item menu and the sub item menu and then release his left thumb from the touch button 910 to close or hide the item menu.

It should be noted herein that when the user selects one of the items, an item selecting function is also activated, in which the function corresponding to the selected item is executed or a sub item menu of the selected item is displayed. At this time, the press of the touch sensitive area is no longer needed, such that the user may release the press of the touch sensitive area and keep selecting the items.

In summary, through a long press on a touch button, a touchpad or a specific area on the touch screen, the user interface operating method of the present invention provides more combinations of gestures to perform a variety of operations supported by the operating system such as zooming, shifting, scrolling, rotating a frame, or selecting an item in an item menu. Accordingly, the convenience for operating the user interface can be improved.

It will be apparent to those skilled in the art that various modifications and variations can be made to the structure of the present invention without departing from the scope of the invention. In view of the foregoing, it is intended that the present invention covers modifications and variations of this invention provided they fall within the scope of the following claims and their equivalents.

## Claims

1. A user interface operating method, suitable for an electronic device having a touch screen, the method comprising:
detecting a first touch on a touch sensitive area;
detecting a second touch on the touch screen when the first touch is detected to be laid on the touch sensitive area; and
enabling an operation element of the user interface according to the second touch.

2. A user interface operating method according to claim 1, wherein the electronic device is powered on.

3. A user interface operating method according to claim 1 or claim 2, wherein when the first touch is detected to be laid on the touch sensitive area, the method further comprises:
displaying a GUI element on the touch screen;
detecting the second touch over the GUI element; and
enabling the function of the GUI element according to the second touch.

4. A user interface operating method according to claim 3, wherein before displaying the GUI element on the touch screen, the method further comprises:
determining whether the first touch lays on the touch sensitive area for more than a preset amount of time; and
displaying the GUI element on the touch screen when the first touch lays on the touch sensitive area for more than the preset amount of time.

5. A user interface operating method according to claim 3 or claim 4, wherein the GUI element is deactivated when the first touch is no longer detected.

6. A user interface operating method according to any of claims 3 to 5, wherein the GUI element comprises a virtual control button or a virtual scroll wheel.

7. A user interface operating method according to claim 6, wherein the step of enabling the function of the GUI element according to the second touch comprises:
executing a control operation on the touch screen according to the second touch operated over the virtual control button.

8. A user interface operating method according to claim 7, wherein the control operation comprises zooming, shifting, or rotating a frame displayed on the touch screen.

9. A user interface operating method according to claim 6, wherein the step of enabling the function of the GUI element according to the second touch comprises:
scrolling a frame displayed on the touch screen according to the second touch operated over the virtual scroll wheel.

10. A user interface operating method according to any preceding claim, wherein when the first touch is detected to be laid on the touch sensitive area, the method further comprises:
displaying an item menu on the touch screen, wherein the item menu comprises a plurality of items;
detecting the second touch over one of the items in the item menu; and
performing an operation corresponding to the item selected by the second touch.

11. A user interface operating method according to claim 10, wherein before displaying the item menu on the touch screen, the method further comprises:
determining whether the first touch lays on the touch sensitive area for more than a preset amount of time; and
displaying the item menu on the touch screen when the first touch lays for more than the preset amount of time.

12. A user interface operating method according to claim 10 or claim 11, wherein the item menu is closed, hidden, or deactivated when the first touch is no longer detected.

13. A user interface operating method according to claim 1, wherein the step of enabling the operation element of the user interface according to the second touch comprises:
scrolling a frame displayed on the touch screen according to a displacement of the second touch.

14. A user interface operating method according to claim 1, wherein the step of enabling the operation element of the user interface according to the second touch comprises:
adjusting a size of a frame displayed on the touch screen according to a displacement of the second touch.

15. A user interface operating method according to claim 1, wherein the touch sensitive area is on a touch sensitive element disposed on the electronic device.
